# EUROPÄISCHE PATENTSCHRIFT

(11) **EP 3 838 658 B1**
(45) Veröffentlichungstag und Bekanntmachung des Hinweises auf die Patenterteilung: **23.08.2023**
(21) Anmeldenummer: 20208249.1
(22) Anmeldetag: 18.11.2020
(51) Int. Cl.: B60L 58/30, B60L 50/71, B60L 5/32, H01M 8/04111, B60L 1/00, B60L 9/00, F15B 21/048, H01M 8/04694, H01M 8/04746

(54) **FAHRZEUG MIT PNEUMATISCH VERSTELLBAREM STROMABNEHMER**
VEHICLE WITH PNEUMATICALLY ADJUSTABLE CURRENT COLLECTOR
VÉHICULE AVEC COLLECTEUR DE COURANT PNEUMATIQUE RÉGLABLE

(30) Priorität: 18.12.2019 DE 102019220068
(43) Veröffentlichungstag der Anmeldung: 23.06.2021
(73) Patentinhaber: Siemens Mobility GmbH, 81739 München (DE)
(72) Erfinder: PEYMANDAR, De-Niang Maria, 41199 Mönchengladbach (DE)
(74) Vertreter: Siemens Patent Attorneys

(56) Entgegenhaltungen:
- EP-A2- 0 755 088
- EP-A2- 1 724 147
- WO-A1-2017/042140
- WO-A1-2017/042141
- WO-A2-2015/028291

## Beschreibung

Die Erfindung bezieht sich auf Fahrzeuge mit zumindest einem pneumatisch verstellbaren Stromabnehmer zum Anschluss an ein streckenseitiges Energieversorgungsnetz, wobei der Stromabnehmer in eine ausgefahrene Kontaktstellung, in der er mit dem streckenseitigen Energieversorgungsnetz in Kontakt stehen kann, und eine eingefahrene Trennstellung, in der er von dem streckenseitigen Energieversorgungsnetz getrennt ist, verstellbar ist, und mit einem Hauptluftbehälter, in dem Luft unter Druck speicherbar ist und der zur pneumatischen Druckbeaufschlagung des Stromabnehmers mit diesem verbindbar ist.

Derartige Fahrzeuge sind beispielsweise im Bereich der Schienenfahrzeugtechnik allgemein bekannt und zum Beispiel in dem Artikel "Automatische Stromabnehmer-Senkeinrichtung (AS)" auf S. 99-102 der Fachzeitschrift BahnPraxis, Ausgabe Oktober 2002, beschrieben. Bei vorbekannten Fahrzeugen dieser Art ist den Stromabnehmern bzw. Hubantrieben jeweils ein eigenes, also hubantriebbezogenes, pneumatisches Druckluftsystem zugeordnet.

Aus dem Dokument WO 2017/042131 A1 ist die Versorgung eines Schienenfahrzeugs mit Druckluft als Betriebsenergie bekannt. Das Dokument EP 1 724 147 A2 offenbart eine Steuerungseinrichtung für eine elektrische Lokomotive mit einer Brennstoffzelle sowie das Dokument EP 0 755 088 A2 ein regeneratives Versorgungssystem mit einer Brennstoffzelle sowie einer Elektrolyseeinrichtung. Schließlich offenbart das Dokument WO 2015/028291 A2 ein Druckluftsystem zum Antreiben eines Stromabnehmers eines Schienenfahrzeugs.

Der Erfindung liegt die Aufgabe zugrunde, Fahrzeuge der oben beschriebenen Art im Falle einer zusätzlichen Ausstattung mit einer oder mehreren Brennstoffzellen besonders kostengünstig und effizient auszugestalten.

Diese Aufgabe wird erfindungsgemäß durch ein Fahrzeug sowie ein Verfahren mit den jeweiligen Merkmalen der unabhängigen Patentansprüche gelöst. Vorteilhafte Ausgestaltungen des erfindungsgemäßen Fahrzeugs sind in abhängigen Patentansprüchen angegeben.

Danach ist erfindungsgemäß vorgesehen, dass das Fahrzeug eine steuerbare Verteileinrichtung, einen Hauptkompressor und zumindest eine Brennstoffzelle aufweist, wobei die steuerbare Verteileinrichtung mit dem Hauptluftbehälter, dem Hauptkompressor und der zumindest einen Brennstoffzelle des Fahrzeugs in Verbindung steht und je nach ihrer Arbeitsstellung die vom Hauptkompressor zur Verfügung gestellte Druckluft aufteilen und einen Anteil der Druckluft zur Brennstoffzelle und einen anderen Anteil der Druckluft zum Hauptluftbehälter lenken kann, und das Fahrzeug eine mit der steuerbaren Verteileinrichtung in Verbindung stehende Steuereinrichtung aufweist, die derart ausgestaltet ist, dass sie die Arbeitsstellung der Verteileinrichtung zumindest in Abhängigkeit von einem Sauerstoffbedarf so einstellt, dass der Sauerstoffbedarf der Brennstoffzelle gedeckt wird.

Ein wesentlicher Vorteil des erfindungsgemäßen Fahrzeugs ist darin zu sehen, dass die Versorgung der Brennstoffzelle bzw. Brennstoffzellen und die Versorgung des oder der Stromabnehmer mittels ein und desselben Hauptkompressors erfolgen kann, sodass das zur Druckluftversorgung der genannten Komponenten nötige pneumatische Druckluftsystem besonders komponentenarm und damit kostengünstig ausgeführt werden kann.

Besonders bevorzugt wählt die Steuereinrichtung die Arbeitsstellung der Verteileinrichtung auch in Abhängigkeit von dem Füllzustand des Hauptluftbehälters.

Im Falle, dass der Hauptkompressor mehr Druckluft zur Verfügung stellt, als die Brennstoffzelle zum Betrieb benötigt, lenkt die Steuereinrichtung mittels der Verteileinrichtung vorzugsweise (gemäß einer vorteilhaften Vorgabe) die von der Brennstoffzelle nicht benötigte Druckluft in Richtung Hauptluftbehälter, zumindest dann, wenn der Hauptluftbehälter noch nicht bis zu einem gewünschten Maß gefüllt ist.

Im Falle, dass der Hauptkompressor mehr Druckluft zur Verfügung stellt, als die Brennstoffzelle zum Betrieb benötigt, und der Hauptluftbehälter bereits bis zu dem gewünschten Maß gefüllt ist, reduziert die Steuereinrichtung (gemäß einer vorteilhaften Vorgabe) vorzugsweise die Pumpleistung des Hauptkompressors auf das für den Betrieb der Brennstoffzelle nötige Maß.

Im Falle, dass der Hauptkompressor die Druckluft zur Verfügung stellt, die die Brennstoffzelle zum Betrieb benötigt, jedoch der Hauptluftbehälter noch nicht bis zu dem gewünschten Maß gefüllt ist, erhöht die Steuereinrichtung (gemäß einer vorteilhaften Vorgabe) vorzugsweise die Pumpleistung des Hauptkompressors und lenkt die durch die Erhöhung zusätzlich zur Verfügung stehende Druckluft über die Verteileinrichtung zum Hauptluftbehälter.

Die Steuereinrichtung errechnet das jeweils gewünschte Maß, auf das der Hauptluftbehälter befüllt sein soll und das demgemäß eine vorteilhafte Vorgabe bildet, bevorzugt zumindest auch anhand von Streckendaten.

Besonders vorteilhaft ist es, wenn die Steuereinrichtung das jeweils gewünschte Maß unter Berücksichtigung der Elektrifizierung der zu befahrenden Strecke und/oder der zu erwartenden Verstellbewegungen des oder der Stromabnehmer während der Fahrt ermittelt.

Die Verteileinrichtung umfasst vorzugsweise eine zumindest drei Anschlüsse aufweisende Ventileinrichtung, einen oder mehrere Druckzwischenspeicher und/oder einen oder mehrere Gasflussregler.

Auch ist es vorteilhaft, wenn die Verteileinrichtung ein 3/2-Wegeventil oder ein stufenlos arbeitendes Ventil aufweist, das ausgangsseitig eine beliebige Gasstromverteilung ermöglicht.

Mit Blick auf eine sichere Versorgung der Stromabnehmer mit Druckluft wird es außerdem als vorteilhaft angesehen, wenn ein Hilfsluftbehälter und/oder ein Hilfskompressor, der den Hilfsluftbehälter befüllen kann, vorhanden sind, und mit der Luft des Hilfsluftbehälters und/oder des Hilfskompressors der oder die Stromabnehmer verstellbar sind, wenn der Hauptluftbehälter nicht ausreichend Druckluft zur Verfügung stellen kann.

Der Hauptluftbehälter wird bei einer bevorzugten Ausgestaltung durch einen oder mehrere Einzelluftbehälter gebildet.

Die Erfindung bezieht sich darüber hinaus auf ein Verfahren zum Betreiben eines Fahrzeugs, das ausgestattet ist mit zumindest einem pneumatisch verstellbaren Stromabnehmer, der in einer ausgefahrenen Kontaktstellung mit einem streckenseitigen Energieversorgungsnetz in Kontakt stehen kann und in einer eingefahrenen Trennstellung von dem streckenseitigen Energieversorgungsnetz getrennt ist, und mit einem Hauptluftbehälter, in dem Luft unter Druck speicherbar ist und der zur pneumatischen Druckbeaufschlagung des Stromabnehmers mit diesem verbindbar ist.

Erfindungsgemäß ist bezüglich des Verfahrens vorgesehen, dass die Arbeitsstellung einer steuerbaren Verteileinrichtung, die mit dem Hauptluftbehälter, einem Hauptkompressor und einer Brennstoffzelle des Fahrzeugs in Verbindung steht, zumindest in Abhängigkeit von einem Sauerstoffbedarf der Brennstoffzelle so eingestellt wird, dass der Sauerstoffbedarf der Brennstoffzelle gedeckt wird, und je nach Arbeitsstellung die vom Hauptkompressor zur Verfügung gestellte Druckluft aufgeteilt wird und ein Anteil der Druckluft zur Brennstoffzelle und ein anderer Anteil der Druckluft zum Hauptluftbehälter gelenkt wird.

Bezüglich der Vorteile des erfindungsgemäßen Verfahrens sowie vorteilhafter Ausgestaltungen des erfindungsgemäßen Verfahrens sei auf die obigen Ausführungen im Zusammenhang mit dem erfindungsgemäßen Fahrzeug sowie dessen vorteilhafte Ausgestaltungen verwiesen.

Die Erfindung wird nachfolgend anhand von Ausführungsbeispielen näher erläutert, dabei zeigen beispielhaft
- Figur 1: Bestandteile eines ersten Ausführungsbeispiels für ein erfindungsgemäßes Fahrzeug, bei dem es sich vorzugsweise um ein Schienenfahrzeug handelt,
- Figur 2: Bestandteile eines zweiten Ausführungsbeispiels für ein erfindungsgemäßes Fahrzeug, das verglichen mit dem ersten Ausführungsbeispiel mit weiteren Komponenten ausgestattet ist, und
- Figur 3: Bestandteile eines dritten Ausführungsbeispiels für ein erfindungsgemäßes Fahrzeug, das verglichen mit dem zweiten Ausführungsbeispiel zusätzlich mit einem Hilfskompressor und einem Hilfsluftbehälter ausgestattet ist.

In den Figuren werden für identische oder vergleichbare Komponenten stets dieselben Bezugszeichen verwendet.

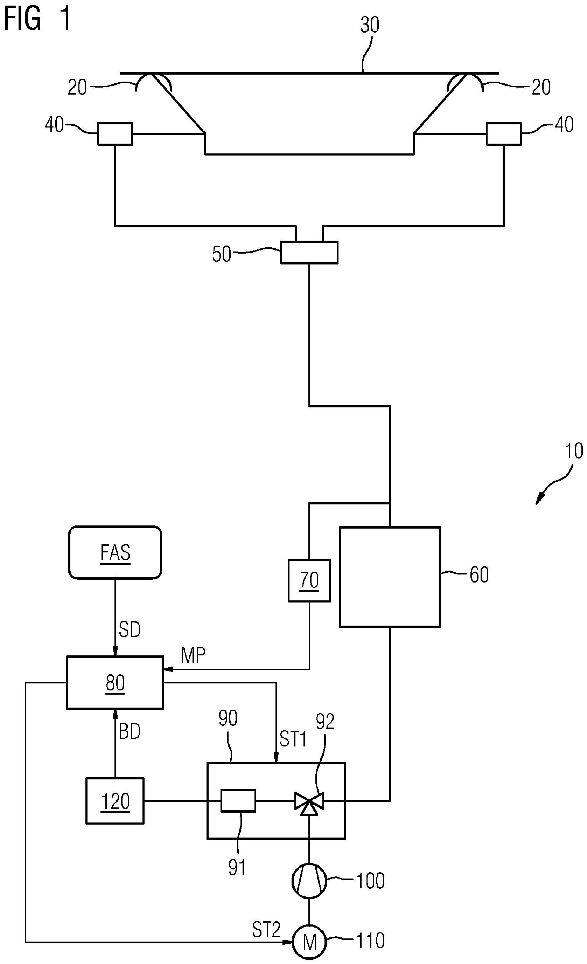

Die Figur 1 zeigt in einer schematischen Darstellung Bestandteile eines Ausführungsbeispiels für ein erfindungsgemäßes Fahrzeug 10, bei dem es sich vorzugsweise um ein Schienenfahrzeug handelt. Das Fahrzeug 10 umfasst zwei Stromabnehmer 20, die pneumatisch verstellbar sind und in der in der Figur 1 gezeigten Stellung elektrischen Kontakt zu einem streckenseitigen Energieversorgungsnetz 30 aufweisen. Von der in der Figur 1 ausgefahrenen Kontaktstellung können die Stromabnehmer 20 in eine eingefahrene Trennstellung verfahren werden, in der sie von dem streckenseitigen Energieversorgungsnetz 30 getrennt sind. Zum Verstellen der verstellbaren Stromabnehmer 20 sind Hubantriebe 40 vorgesehen, die pneumatisch arbeiten und pneumatisch über ein Stromabnehmereinstellventil 50 mit Druckluft beaufschlagt werden können.

Das Stromabnehmereinstellventil 50 steht mit einem Hauptluftbehälter 60 in Verbindung, der - im gefüllten Zustand - das Stromabnehmereinstellventil 50 und damit die Hubantriebe 40 speisen kann.

Der Füllzustand bzw. der Druckzustand des Hauptluftbehälters 60 wird von einem Druckwächter 70 überwacht, der mit einer Steuereinrichtung 80 in Verbindung steht und dieser einen den jeweiligen Füllstand des Hauptluftbehälters 60 angebenden Druckwert MP zur weiteren Verarbeitung übermittelt. Gespeist bzw. mit Druckluft gefüllt wird der Hauptluftbehälter 60 über eine steuerbare Verteileinrichtung 90 von einem Hauptkompressor 100, der von einem Hauptkompressormotor 110 angetrieben wird.

Die steuerbare Verteileinrichtung 90 umfasst bei dem Ausführungsbeispiel gemäß Figur 1 einen Flussregler 91 und eine verstellbare Ventileinrichtung 92. Die verstellbare Ventileinrichtung 92 und der Flussregler 91 werden von der Steuereinrichtung 80 über ein Steuersignal ST1 gesteuert bzw. eingestellt.

An die steuerbare Verteileinrichtung 90, insbesondere den Flussregler 91, ist eine Brennstoffzelle 120 angeschlossen, die während des Betriebes mit Sauerstoff gespeist wird, und zwar über den Flussregler 91, die verstellbare Ventileinrichtung 92 und den Hauptkompressor 100. Der Hauptkompressormotor 110 wird von der Steuereinrichtung 80 beispielsweise über ein Steuersignal ST2 gesteuert.

Die Steuereinrichtung 80 ist darüber hinaus mit der Brennstoffzelle 120 oder zumindest einer den Betrieb der Brennstoffzelle 120 steuernden Einrichtung verbunden und erhält von dieser Betriebsdaten BD, die den jeweiligen Betriebszustand der Brennstoffzelle 120 sowie damit unmittelbar oder mittelbar den jeweiligen Sauerstoffbereich der Brennstoffzelle 120 angeben.

Eingangsseitig steht die Steuereinrichtung 80 darüber hinaus mit einer Einrichtung, beispielsweise einer Fahrerassistenzeinrichtung FAS, in Verbindung, von der sie Streckendaten SD erhält. Die Streckendaten SD umfassen unter anderem Angaben zur Elektrifizierung der zu befahrenden Strecke und/oder zu erwartenden Verstellbewegungen der Stromabnehmer 20, sodass der Druckluftbedarf der Hubantriebe 40 und damit die vom Hauptluftbehälter 60 bereitzustellende Druckluft prognostizierbar sind.

Die in der Figur 1 schematisch dargestellte verstellbare Ventileinrichtung 92 ist vorzugsweise derart ausgestaltet, dass sie ausgangsseitig eine beliebige Gasstromverteilung erlaubt und es somit der Steuereinrichtung 80 ermöglicht, mittels des Steuersignals ST1 festzulegen, in welchem Maße die von dem Hauptkompressor 100 bereitgestellte Druckluft auf die Brennstoffzelle 120 und den Hauptluftbehälter 60 verteilt werden soll. Die Einstellung der Verteileinrichtung 90 bzw. der verstellbaren Ventileinrichtung 92 wird die Steuereinrichtung 80 mittels des Steuersignals ST1 vorzugsweise sowohl in Abhängigkeit von dem jeweiligen Sauerstoffbedarf der Brennstoffzelle 120 als auch in Abhängigkeit vom jeweiligen Füllstand des Hauptluftbehälters 60 vornehmen. Dabei wird die Steuereinrichtung 80 die Verteileinrichtung 90 stets jeweils so einstellen, dass der Sauerstoffbedarf der Brennstoffzelle 120 zu jedem Zeitpunkt gedeckt wird.

Im Falle, dass der Hauptkompressor 100 mehr Druckluft zur Verfügung stellt oder zur Verfügung stellen kann, als die Brennstoffzelle 120 zum Betrieb benötigt, wird die Steuereinrichtung 80 vorzugsweise mittels der Verteileinrichtung 90 die von der Brennstoffzelle 120 nicht benötigte Druckluft in Richtung des Hauptluftbehälters 60 lenken, zumindest dann, wenn der Hauptluftbehälter 60 gemäß dem Druckwert MP noch nicht bis zu einem gewünschten Maße gefüllt ist.

Im Falle, dass der Hauptkompressor 100 mehr Druckluft zur Verfügung stellt, als die Brennstoffzelle 120 zum Betrieb benötigt, und der Hauptluftbehälter 60 bereits bis zu dem gewünschten Maße gefüllt ist, wird die Steuereinrichtung 80 die Pumpleistung des Hauptkompressors 100 bzw. des Hauptkompressormotors 110 mittels des Steuersignals ST2 auf das für den Betrieb der Brennstoffzelle 120 nötige Maß reduzieren und ein weiteres Befüllen des Hauptluftbehälters 60 einstellen.

Andernfalls, wenn also der Hauptkompressor 100 die Druckluft zur Verfügung stellt, die die Brennstoffzelle 120 benötigt, jedoch der Hauptluftbehälter 60 noch nicht bis zu dem gewünschten Maß gefüllt ist, wird die Steuereinrichtung 80 die Pumpleistung des Hauptkompressors 100 bzw. des Hauptkompressormotors 110 mittels des Steuersignals ST2 (sofern noch möglich) erhöhen, und die durch die Erhöhung zusätzlich zur Verfügung stehende Druckluft über die Verteileinrichtung 90 in Richtung des Hauptluftbehälters 60 lenken.

Auch kann die Steuereinrichtung 80 - beispielsweise über ein in der Figur 1 nicht gezeigtes weiteres Steuersignal - die Leistung der Brennstoffzelle 120 reduzieren, wenn sie Druckluft in den Hauptluftbehälter 60 füllen will, die vor einer Reduktion der Leistung der Brennstoffzelle 120 nicht zur Verfügung stehen würde. Ein vollständiges Herunterfahren der Brennstoffzellenleistung wird dabei vorzugsweise vermieden.

Das gewünschte Maß, auf das der Hauptluftbehälter 60 befüllt sein soll, wird vorzugsweise zumindest auch anhand der Streckendaten SD von der Steuereinrichtung 80 berechnet. Dabei wird die Steuereinrichtung 80 vorzugsweise die Elektrifizierung der zu befahrenden Strecke sowie die zu erwartenden Verstellbewegungen der Stromabnehmer 20 während der Fahrt ermitteln, den Druckluftbedarf errechnen und in Abhängigkeit von dem Druckluftbedarf den jeweils optimalen Füllstand des Hauptluftbehälters 60 für den weiteren Betrieb einstellen. Es lässt sich durch diese Vorgehensweise in vorteilhafter Weise die Befüllung des Hauptluftbehälters 60 auf ein streckenseitig notwendiges Maß begrenzen.

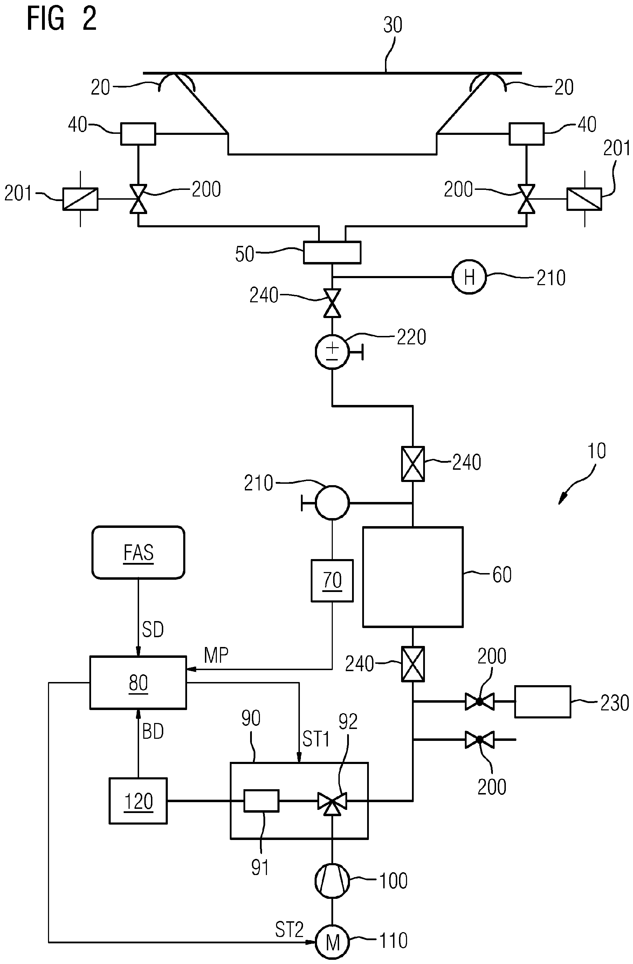

Die Figur 2 zeigt eine Ausführungsvariante des Ausführungsbeispiels gemäß Figur 1. Bei der Ausführungsvariante gemäß Figur 2 weist das Fahrzeug 10 eine Vielzahl weiterer Komponenten auf, nämlich Steuerventile 200, Ventileinrichtungen 201 zum Ansteuern von Steuerventilen, Hauptschalter 210, Überdruckventile 220, Kondensatabscheider 230 und Druckluftflussmesseinrichtungen 240. Die genannten Komponenten ermöglichen ein individuelles Einstellen von Druck und Druckluftdurchfluss an verschiedenen Stellen innerhalb des in der Figur 2 gezeigten pneumatischen Gesamtsystems, sodass eine optimale Steuerung und ein optimaler Betrieb aller Komponenten gewährleistet werden kann und ein Ausfall und eine Beschädigung von Komponenten durch einen etwaigen Überdruck vermieden werden können.

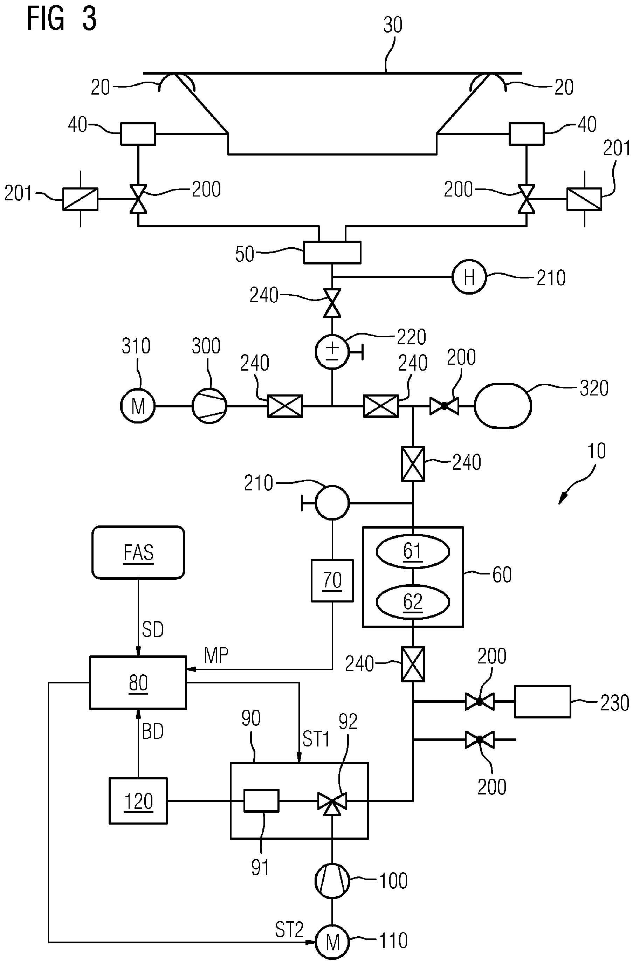

Die Figur 3 zeigt Bestandteile eines dritten Ausführungsbeispiels für ein erfindungsgemäßes Fahrzeug 10. Bei dem Ausführungsbeispiel gemäß Figur 3 sind zusätzlich ein Hilfskompressor 300, ein Hilfskompressormotor 310 sowie ein Hilfsluftbehälter 320 vorhanden, die im Falle eines Ausfalls der Druckluftversorgung seitens des Hauptluftbehälters 60 bzw. im Falle eines Ausfalls des Hauptkompressors 100 und/oder des Hauptkompressormotors 110 ersatzweise Druckluft zur Verfügung stellen können, um einen Notbetrieb der Hubantriebe 40 und ein Verstellen der Stromabnehmer 20 zu gewährleisten.

Außerdem ist der Hauptluftbehälter 60 bei dem Ausführungsbeispiel gemäß Figur 3 durch zwei Einzelluftbehälter 61 und 62 gebildet, die in Reihe - wie gezeigt - oder parallel geschaltet sein können.

Zusammengefasst ermöglichen die im Zusammenhang mit den Figu-ren 1 bis 3 oben beispielhaft erläuterten Ausführungsbeispiele eine Doppelnutzung des Hauptkompressors 100, da das Stromabnehmerhubsystem und das Brennstoffzellensystem jeweils an dasselbe Luftdruckversorgungssystem angeschlossen sind. Der Luftbedarf der Brennstoffzelle 120 ist durch die jeweilige Leistungsanforderung sehr genau definierbar. Da die Brennstoffzelle 120 im Idealfall mit konstanter Leistung gefahren werden soll, ist der Luftbedarf also bekannt. Zeitgleich sind die Streckendaten SD bekannt, woraus man den Einsatzzeitpunkt der Stromabnehmer 20 schlussfolgern kann. Durch die beschriebene intelligente Nutzung und Speicherung der Luft können die Stromabnehmer 20 und die Brennstoffzelle 120 gemeinsam gespeist werden.

Der Luftmasseninhalt des Hauptluftbehälters 60 wird vorzugsweise durch einen der Druckwächter 70 überwacht. Durch verschiedene Alarmstufen kann der Hauptkompressor 100 reagieren und beispielsweise mehr Luft in Richtung Hubantriebe 40 pressen, wenn die Leistung der Brennstoffzelle 120 dementsprechend reduziert wird. Die Brennstoffzelle 120 sollte nicht ausgeschaltet werden, da häufiges Starten und Ausschalten der Brennstoffzelle 120 die Lebensdauer negativ beeinflusst.

Aus diesem Grund kann - wie bei dem Ausführungsbeispiel gemäß Figur 3 gezeigt - auch ein Hilfskompressor 300 vorgesehen werden, welcher den Hilfsluftbehälter 320 speist. Sollte der Druck in dem Hauptluftbehälter 60 beispielsweise zu niedrig sein, so kann die Luft aus dem Hilfsluftbehälter 320 ebenfalls für die Hubantriebe 40 der Stromabnehmer 20 verwendet werden. Ein Herunterfahren der Brennstoffzellenleistung ist im Fall einer solchen Ausgestaltung in der Regel nicht nötig.

Ein Vorteil der oben beschriebenen Ausführungsbeispiele besteht zusammengefasst darin, das ein separater bzw. eigener Hubantriebskompressor für die Hubantriebe 40 der Stromabnehmer 20 eingespart werden kann. Es entfallen somit die hierfür entstehenden Service- und Anschaffungskosten. Auch lässt sich der Gesamtwirkungsgrad des Fahrzeugs 10 wegen des resultierenden Gewichtswegfalls und verkleinerter Hilfsbetriebeumrichter(HBU)-Leistung reduzieren. Ebenfalls wird Bauraum freigegeben, welcher sonst durch die zusätzlich nötige Verrohrung und den zusätzlichen Hubantriebskompressor beansprucht werden würde.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 10: Fahrzeug
- 20: Stromabnehmer
- 30: Energieversorgungsnetz
- 40: Hubantrieb
- 50: Stromabnehmereinstellventil
- 60: Hauptluftbehälter
- 61: Einzelluftbehälter
- 62: Einzelluftbehälter
- 70: Druckwächter
- 80: Steuereinrichtung
- 90: Verteileinrichtung
- 91: Flussregler
- 92: verstellbare Ventileinrichtung
- 100: Hauptkompressor
- 110: Hauptkompressormotor
- 120: Brennstoffzelle
- 200: Steuerventil
- 201: Ventileinrichtung
- 210: Hauptschalter
- 220: Überdruckventil
- 230: Kondensatabscheider
- 240: Druckluftflussmesseinrichtung
- 300: Hilfskompressor
- 310: Hilfskompressormotor
- 320: Hilfsluftbehälter

- BD: Betriebsdaten
- FAS: Fahrerassistenzeinrichtung
- MP: Druckwert
- SD: Streckendaten
- ST1: Steuersignal
- ST2: Steuersignal

## Patentansprüche

1. Fahrzeug (10) mit
- zumindest einem pneumatisch verstellbaren Stromabnehmer (20) zum Anschluss an ein streckenseitiges Energieversorgungsnetz (30), wobei der Stromabnehmer (20) in eine ausgefahrene Kontaktstellung, in der er mit dem streckenseitigen Energieversorgungsnetz (30) in Kontakt stehen kann, und eine eingefahrene Trennstellung, in der er von dem streckenseitigen Energieversorgungsnetz (30) getrennt ist, verstellbar ist, und
- mit einem Hauptluftbehälter (60), in dem Luft unter Druck speicherbar ist und der zur pneumatischen Druckbeaufschlagung des Stromabnehmers (20) mit diesem verbindbar ist,
**dadurch gekennzeichnet, dass**
- das Fahrzeug (10) eine steuerbare Verteileinrichtung (90), einen Hauptkompressor (100) und zumindest eine Brennstoffzelle (120) aufweist, wobei die steuerbare Verteileinrichtung (90) mit dem Hauptluftbehälter (60), dem Hauptkompressor (100) und der zumindest einen Brennstoffzelle (120) des Fahrzeugs (10) in Verbindung steht und je nach ihrer Arbeitsstellung die vom Hauptkompressor (100) zur Verfügung gestellte Druckluft aufteilen und einen Anteil der Druckluft zur Brennstoffzelle (120) und einen anderen Anteil der Druckluft zum Hauptluftbehälter (60) lenken kann, und
- das Fahrzeug (10) eine mit der steuerbaren Verteileinrichtung (90) in Verbindung stehende Steuereinrichtung (80) aufweist, die derart ausgestaltet ist, dass sie die Arbeitsstellung der Verteileinrichtung (90) zumindest in Abhängigkeit von einem Sauerstoffbedarf der Brennstoffzelle (120) so einstellt, dass der Sauerstoffbedarf der Brennstoffzelle (120) gedeckt wird.

2. Fahrzeug (10) nach Anspruch 1,
**dadurch gekennzeichnet, dass**
die Steuereinrichtung (80) die Arbeitsstellung der Verteileinrichtung (90) in Abhängigkeit von einem Füllzustand des Hauptluftbehälters (60) wählt.

3. Fahrzeug (10) nach einem der voranstehenden Ansprüche,
**dadurch gekennzeichnet, dass**
im Falle, dass der Hauptkompressor (100) mehr Druckluft zur Verfügung stellt, als die Brennstoffzelle (120) zum Betrieb benötigt, die Steuereinrichtung (80) mittels der Verteileinrichtung (90) die von der Brennstoffzelle (120) nicht benötigte Druckluft in Richtung Hauptluftbehälter (60) lenkt, zumindest dann, wenn der Hauptluftbehälter (60) noch nicht bis zu einem gewünschten Maß gefüllt ist.

4. Fahrzeug (10) nach einem der voranstehenden Ansprüche,
**dadurch gekennzeichnet, dass**
im Falle, dass der Hauptkompressor (100) mehr Druckluft zur Verfügung stellt, als die Brennstoffzelle (120) zum Betrieb benötigt, und der Hauptluftbehälter (60) bis zu einem gewünschten Maß gefüllt ist, die Steuereinrichtung (80) die Pumpleistung des Hauptkompressors (100) auf das für den Betrieb der Brennstoffzelle (120) nötige Maß reduziert.

5. Fahrzeug (10) nach einem der voranstehenden Ansprüche,
**dadurch gekennzeichnet, dass**
im Falle, dass der Hauptkompressor (100) die Druckluft zur Verfügung stellt, die die Brennstoffzelle (120) zum Betrieb benötigt, jedoch der Hauptluftbehälter (60) noch nicht bis zu einem gewünschten Maß gefüllt ist, die Steuereinrichtung (80) die Pumpleistung des Hauptkompressors (100) erhöht und die durch die Erhöhung zusätzlich zur Verfügung stehende Druckluft über die Verteileinrichtung (90) zum Hauptluftbehälter (60) lenkt.

6. Fahrzeug (10) nach einem der voranstehenden Ansprüche,
**dadurch gekennzeichnet, dass**
die Steuereinrichtung (80) das jeweils gewünschte Maß, auf das der Hauptluftbehälter (60) befüllt sein soll, anhand von Streckendaten (SD) errechnet.

7. Fahrzeug (10) nach Anspruch 6,
**dadurch gekennzeichnet, dass**
die Steuereinrichtung (80) das jeweils gewünschte Maß unter Berücksichtigung der Elektrifizierung der zu befahrenden Strecke und/oder der zu erwartenden Verstellbewegungen des Stromabnehmers (20) während der Fahrt ermittelt.

8. Fahrzeug (10) nach einem der voranstehenden Ansprüche,
**dadurch gekennzeichnet, dass**
die Verteileinrichtung (90) eine zumindest drei Anschlüsse aufweisende Ventileinrichtung (92), einen oder mehrere Druckzwischenspeicher und/oder einen oder mehrere Gasflussregler (91) aufweist.

9. Fahrzeug (10) nach einem der voranstehenden Ansprüche,
**dadurch gekennzeichnet, dass**
die Verteileinrichtung (90) ein 3/2-Wegeventil oder ein stufenlos arbeitendes Ventil aufweist, das ausgangsseitig eine beliebige Gasstromverteilung ermöglicht.

10. Fahrzeug (10) nach einem der voranstehenden Ansprüche,
**dadurch gekennzeichnet, dass**
- ein Hilfsluftbehälter (320) und/oder ein Hilfskompressor (300), der den Hilfsluftbehälter (320) befüllen kann, vorhanden sind, und
- mit der Luft des Hilfsluftbehälters (320) und/oder des Hilfskompressors (300) der Stromabnehmer (20) verstellbar ist, wenn der Hauptluftbehälter (60) nicht ausreichend Druckluft zur Verfügung stellen kann.

11. Fahrzeug (10) nach einem der voranstehenden Ansprüche,
**dadurch gekennzeichnet, dass**
der Hauptluftbehälter (60) durch einen oder mehrere Einzelluftbehälter (61, 62) gebildet wird.

12. Verfahren zum Betreiben eines Fahrzeugs (10), das ausgestattet ist
- mit zumindest einem pneumatisch verstellbaren Stromabnehmer (20), der in einer ausgefahrenen Kontaktstellung mit einem streckenseitigen Energieversorgungsnetz (30) in Kontakt stehen kann und in einer eingefahrenen Trennstellung von dem streckenseitigen Energieversorgungsnetz (30) getrennt ist, und
- mit einem Hauptluftbehälter (60), in dem Luft unter Druck speicherbar ist und der zur pneumatischen Druckbeaufschlagung des Stromabnehmers (20) mit diesem verbindbar ist,
**dadurch gekennzeichnet, dass**
- die Arbeitsstellung einer steuerbaren Verteileinrichtung (90), die mit dem Hauptluftbehälter (60), einem Hauptkompressor (100) und einer Brennstoffzelle (120) des Fahrzeugs (10) in Verbindung steht, zumindest in Abhängigkeit von einem Sauerstoffbedarf der Brennstoffzelle (120) so eingestellt wird, dass der Sauerstoffbedarf der Brennstoffzelle (120) gedeckt wird, und je nach Arbeitsstellung die vom Hauptkompressor (100) zur Verfügung gestellte Druckluft aufgeteilt wird und ein Anteil der Druckluft zur Brennstoffzelle (120) und ein anderer Anteil der Druckluft zum Hauptluftbehälter (60) gelenkt wird.

## Claims

1. Vehicle (10) with
- at least one pneumatically movable current collector (20) for connection to a track-side power supply network (30), wherein the current collector (20) can be moved into an extended contact position, in which it is in contact with the track-side power supply network (30), and a retracted disconnected position, in which it is separated from the track-side power supply network (30), and
- with a main air tank (60), in which air can be stored under pressure and which can be connected herewith in order to pneumatically pressurise the current collector (20), **characterised in that**
- the vehicle (10) has a controllable distribution facility (90), a main compressor (100) and at least one fuel cell (120), wherein the controllable distribution facility (90) is connected to the main air tank (60), the main compressor (100) and the at least one fuel cell (120) of the vehicle (10) and depending on its operating position divides the compressed air made available by the main compressor (100) and can guide one part of the compressed air to the fuel cell (120) and another part of the compressed air to the main air tank (60), and
- the vehicle (10) has a control facility (80) connected to the controllable distribution facility (90), which is designed so that it adjusts the operating position of the distribution facility (90) at least as a function of an oxygen requirement of the fuel cell (120) so that the oxygen requirement of the fuel cell (120) is covered.

2. Vehicle (10) according to claim 1,
**characterised in that**
the control facility (80) selects the operating position of the distribution facility (90) as a function of a fill level of the main air tank (60).

3. Vehicle (10) according to one of the preceding claims,
**characterised in that**
in the event that the main compressor (100) provides more compressed air than the fuel cell (120) requires for operation, the control facility (80) uses the distribution facility (90) to guide the compressed air not required by the fuel cell (120) in the direction of the main air tank (60), at least when the main air tank (60) has not yet been filled to a desired level.

4. Vehicle (10) according to one of the preceding claims,
**characterised in that**
in the event that the main compressor (100) provides more compressed air than the fuel cell (120) requires for operation, and the main air tank (60) is filled up to a desired level, the control facility (80) reduces the pump output of the main compressor (100) to the level required for operation of the fuel cell (120).

5. Vehicle (10) according to one of the preceding claims,
**characterised in that**
in the event that the main compressor (100) provides the compressed air, which the fuel cell requires (120) for operation, but the main air tank (60) has not yet been filled to a desired level, the control facility (80) increases the pump output of the main compressor (100) and guides the compressed air additionally made available as a result of the increase by way of the distribution facility (90) to the main air tank (60).

6. Vehicle (10) according to one of the preceding claims,
**characterised in that**
the control facility (80) calculates the respectively required level, to which the main air tank (60) is to be filled, using track data (SD).

7. Vehicle (10) according to claim 6,
**characterised in that**
the control facility (80) determines the respective desired level by taking into consideration the electrification of the track to be travelled and/or the adjusting movements of the current collector (20) to be expected during the journey.

8. Vehicle (10) according to one of the preceding claims,
**characterised in that**
the distribution facility (90) has a valve facility (92) having at least three terminals, one or more intermediate pressure storage units and/or one or more gas flow regulators (91) .

9. Vehicle (10) according to one of the preceding claims,
**characterised in that**
the distribution facility (90) has a 3/2 way valve or a valve which operates in a stepless manner, which enables any gas flow distribution on the output side.

10. Vehicle (10) according to one of the preceding claims,
**characterised in that**
- an auxiliary air tank (320) and/or an auxiliary compressor (300), which can fill the auxiliary air tank (320), are available, and
- the current collector (20) can be moved with the air of the auxiliary air tank (320) and/or the auxiliary compressor (300) when the main air tank (60) does not provide sufficient compressed air.

11. Vehicle (10) according to one of the preceding claims, **characterised in that** the main air tank (60) is formed by one or more individual air tanks (61, 62).

12. Method for operating a vehicle (10), which is equipped
- with at least one pneumatically adjustable current collector (20), which, in an extended contact position, can be in contact with a track-side power supply network (30) and in a retracted disconnected position is separated from the track-side power supply network (30), and
- with a main air tank (60), in which air can be stored under pressure and which can be connected herewith in order to pneumatically pressurise the current collector (20),
**characterised in that**
- the operating position of a controllable distribution facility (90), which is connected to the main air tank (60), a main compressor (100) and a fuel cell (120) of the vehicle (10), is adjusted at least as a function of an oxygen requirement of the fuel cell (120) so that the oxygen requirement of the fuel cell (120) is covered and depending on the operating position, the compressed air made available by the main compressor (100) is divided and one part of the compressed air is guided to the fuel cell (120) and another part of the compressed air is guided to the main air tank (60) .

## Revendications

1. Véhicule (10) comprenant
- au moins un appareil (20) de prise de courant réglable pneumatiquement pour le raccordement à un réseau (30) d'alimentation en énergie sur la voie, dans lequel l'appareil (20) de prise de courant peut être mis dans une position de contact déployé, dans laquelle il peut être en contact avec le réseau (30) d'alimentation en énergie sur la voie, et une position de séparation escamotée, dans laquelle il est séparé du réseau (30) d'alimentation en énergie sur la voie, et
- comprenant un récipient (60) d'air principal, dans lequel de l'air peut être accumulé sous pression et qui pour l'application pneumatique d'une pression à l'appareil (20) de prise de courant peut communiquer avec celui-ci,
**caractérisé en ce que**
- le véhicule (10) a un dispositif (90) de répartition, pouvant être commandé, un compresseur (100) principal et au moins un pile (120) à combustible, dans lequel le dispositif (90) de répartition, pouvant être commandé est en liaison avec le récipient (60) d'air principal, le compresseur (100) principal et la au moins une pile (120) à combustible du véhicule (10) et peut, suivant sa position de travail, répartir l'air comprimé mis à disposition par le compresseur (100) principal et diriger une partie de l'air comprimé sur la pile (120) à combustible et une autre partie de l'air comprimé sur le récipient (60) d'air principal, et
- le véhicule (10) a un dispositif (80) de commande, qui est en liaison avec le dispositif (90), pouvant être commandé, de répartition et qui est conformé de manière à régler la position de travail du dispositif (90) de répartition au moins en fonction d'un besoin d'oxygène de la pile (120) à combustible de manière à couvrir le besoin d'oxygène de la pile (120) à combustible.

2. Véhicule (10) suivant la revendication 1,
**caractérisé en ce que**
le dispositif (80) de commande choisit la position de travail du dispositif (90) de répartition en fonction d'un niveau de remplissage du récipient (60) d'air principal.

3. Véhicule (10) suivant l'une des revendications précédentes,
**caractérisé en ce que**
dans le cas où le compresseur (100) principal met à disposition plus d'air comprimé que n'en a besoin la pile (120) à combustible pour son fonctionnement, le dispositif (80) de commande dirige, au moyen du dispositif (90) de répartition, l'air comprimé, dont la pile (120) à combustible n'a pas besoin, en direction du récipient (60) d'air principal au moins lorsque le récipient (60) d'air principal n'est pas encore rempli dans une mesure souhaitée.

4. Véhicule (10) suivant l'une des revendications précédentes,
**caractérisé en ce que**
dans le cas où le compresseur (100) principal met à disposition plus d'air comprimé que n'en a besoin la pile (120) à combustible pour son fonctionnement et ou le récipient (60) d'air principal est rempli dans une mesure souhaitée, le dispositif (80) de commande réduit la puissance de pompage du compresseur (100) principal dans la mesure souhaitée pour le fonctionnement de la pile (120) à combustible.

5. Véhicule (10) suivant l'une des revendications précédentes,
**caractérisé en ce que**
dans le cas où le compresseur (100) principal met à disposition l'air comprimé, dont la pile (120) à combustible a besoin pour son fonctionnement, mais toutefois le récipient (60) d'air principal n'est pas encore rempli dans une mesure souhaitée, le dispositif (80) de commande augmente la puissance de pompage du compresseur (100) principal et dirige par le dispositif (90) de répartition sur le récipient (60) d'air principal l'air comprimé mis à disposition supplémentairement par l'augmentation.

6. Véhicule (10) suivant l'une des revendications précédentes,
**caractérisé en ce que**
le dispositif (80) de commande calcule à l'aide de données (SD) de voie la mesure souhaitée respectivement suivant laquelle le récipient (60) d'air principal doit être rempli.

7. Véhicule (10) suivant la revendication 6,
**caractérisé en ce que**
le dispositif (80) de commande détermine pendant la circulation la mesure souhaitée respectivement, en tenant compte de l'électrification de la voie à emprunter et/ou des mouvements de déplacement, auxquels on peut s'attendre, de l'appareil (20) de prise de courant.

8. Véhicule (10) suivant l'une des revendications précédentes,
**caractérisé en ce que**
le dispositif (90) de répartition a un dispositif (92) de soupape ayant au moins trois raccords, un ou plusieurs accumulateurs intermédiaires de pression et un ou plusieurs régleurs (91) du flux gazeux.

9. Véhicule (10) suivant l'une des revendications précédentes,
**caractérisé en ce que**
le dispositif (90) de répartition a une soupape à 3/2 voies ou une soupape travaillant sans palier, qui rend possible du côté de la sortie une répartition à volonté du courant gazeux.

10. Véhicule (10) suivant l'une des revendications précédentes,
**caractérisé en ce que**
- il y a un récipient (320) d'air auxiliaire et/ou un compresseur (300) auxiliaire, qui peut remplir le récipient (320) d'air auxiliaire, et
- l'appareil (20) de prise de courant peut être réglé par l'air du récipient (320) d'air auxiliaire et/ou du compresseur (300) auxiliaire, si le récipient (60) d'air principal ne peut pas mettre suffisamment d'air comprimé à disposition.

11. Véhicule (10) suivant l'une des revendications précédentes,
**caractérisé en ce que**
le récipient (60) d'air principal est formé par un ou plusieurs récipients (61, 62) d'air individuels.

12. Procédé pour faire fonctionner un véhicule (10) qui est équipé
- d'au moins un appareil (20) de prise de courant réglable pneumatiquement qui, dans une position de contact déployé peut être en contact avec un réseau (30) d'alimentation en énergie sur la voie et dans une position de séparation escamotée être séparé du réseau (30) d'alimentation en énergie sur la voie, et
- d'un récipient (60) d'air principal, dans lequel de l'air peut être accumulé sous pression et qui, pour l'application pneumatique d'une pression à l'appareil (20) de prise de courant peut communiquer avec celui-ci,
**caractérisé en ce que**
- on règle, au moins en fonction d'un besoin d'oxygène de la pile (120) à combustible, la position de travail d'un dispositif (90), pouvant être commandé, de répartition qui est en liaison avec le récipient (60) d'air principal, un compresseur (100) principal et une pile (120) à combustible du véhicule (10) de manière à couvrir le besoin d'oxygène de la pile (120) à combustible et, suivant la position de travail, on répartit l'air comprimé mis à disposition par le compresseur (100) principal et on dirige une partie de l'air comprimé sur la pile (120) à combustible et une autre partie de l'air comprimé sur le récipient (60) d'air principal.
